Europäisches Patentamt

European Patent Office

Office européen des brevets

(11) Publication number: 0 460 590 A1

## (12) EUROPEAN PATENT APPLICATION

(21) Application number: 91109083.5

(22) Date of filing: 04.06.91

(51) Int. Cl.5: C07F 7/18

(30) Priority: 05.06.90 JP 146721/90

(43) Date of publication of application:
11.12.91 Bulletin 91/50

(84) Designated Contracting States:
DE FR GB IT

(71) Applicant: SHIN-ETSU CHEMICAL CO., LTD.
6-1, Ohtemachi 2-chome
Chiyoda-ku Tokyo(JP)

(72) Inventor: Shinohara, Toshio
777-14, Yawata-machi
Takasaki-chi, Gunma-ken(JP)
Inventor: Iwabuchi, Motoaki
1610, Nishi-kamiisobe
Annaka-shi, Gunma-ken(JP)
Inventor: Suzuki, Nobuyuki
3287, Ishihara-machi
Takasaki-shi, Gunma-ken(JP)

(74) Representative: Dr. Fuchs, Dr. Luderschmidt
Dipl.-Phys. Seids, Dr. Mehler Patentanwälte
Abraham-Lincoln-Strasse 7, Postfach 4660
W-6200 Wiesbaden(DE)

(54) Dicyclopentyldialkoxy silanes.

(57) A novel organosilane compound useful as a silylating agent in organic syntheses is proposed which is a dicyclopentyl dialkoxy silane or, in particular, dicyclopentyl dimethoxy silane. The silane compound can be prepared by the reaction of 2 moles of a cyclopentyl magnesium halide as a Grignard reagent with 1 mole of tetramethoxy silane or by the reaction of 2 moles of a dicyclopentyl magnesium halide with 1 mole of tetrachlorosilane to give dicyclopentyl dichlorosilane which is then methoxylated by the reaction with methyl alcohol.

## FIGURE

EP 0 460 590 A1

## BACKGROUND OF THE INVENTION

The present invention relates to a dicyclopentyl dialkoxy silane or, more particularly, to dicyclopentyl dimethoxy silane which is a novel organosilicon compound not known in the prior art nor described in any literatures having usefulness as a silylating agent in several reactions of organic syntheses by virtue of the molecular bulkiness.

tert-Butyl dimethyl chlorosilane is the most widely used organosilicon compound as a silylating agent in many reactions of organic syntheses. This organosilane compound, being monofunctional, cannot be used as a silylating agent when two adjacent hydroxy groups in a molecule of a substrate compound are to be protected by a single molecule of the silylating agent. Along with the recent progress in the art of organic syntheses, it is eagerly desired to develop a novel and efficient silylating agent which can be used in the two-way protection of adjacent hydroxy groups as mentioned above.

## SUMMARY OF THE INVENTION

Thus, the novel organosilicon compound of the invention useful as a silylating agent is a dicyclopentyl dialkoxy silane or, typically, dicyclopentyl dimethoxy silane expressed by the structural formula $(C_5H_9)_2Si(OCH_3)_2$, in which $C_5H_9$ is a cyclopentyl group. This organosilane compound can be prepared, for example, by the reaction of 2 moles of a Grignard reagent cyclopentyl magnesium chloride and 1 mole of tetramethoxy silane or by the reaction of 2 moles of cyclopentyl magnesium chloride with 1 mole of silicon tetrachloride followed by methoxylation of the remaining silicon-bonded chlorine atoms in the intermediate dicyclopentyl dichlorosilane with methyl alcohol.

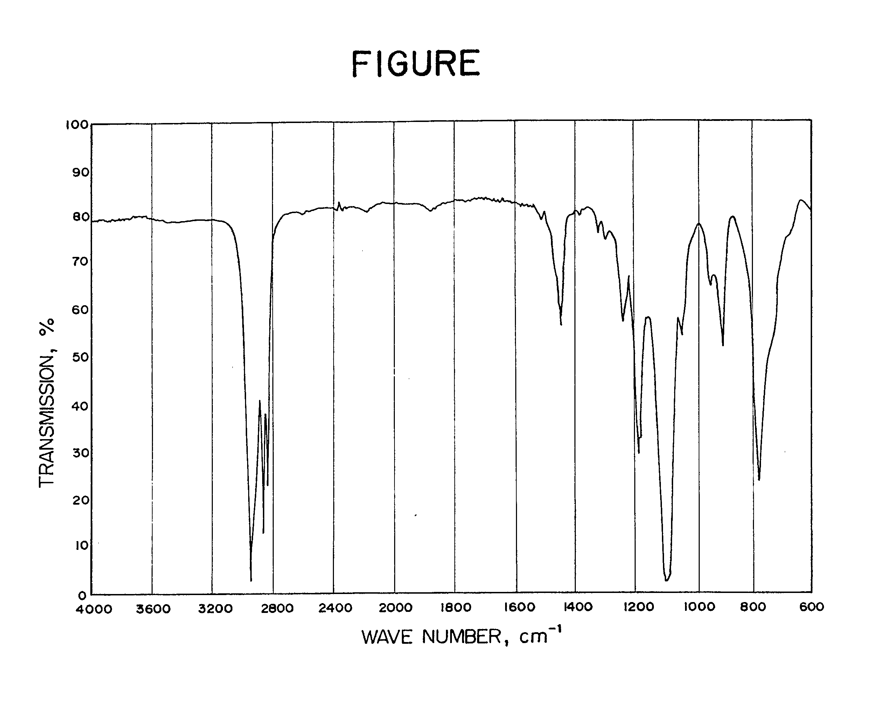

## BRIEF DESCRIPTION OF THE DRAWING

The figure illustrates an infrared absorption spectrum of dicyclopentyl dimethoxy silane of the invention prepared in Example 1.

## DETAILED DESCRIPTION OF THE PREFERRED EMBODIMENTS

Uniquely as compared with conventional organosilicon compounds in which the organic groups bonded to the silicon atoms are mostly methyl and phenyl groups, the dicyclopentyl dialkoxy silane or dicyclopentyl dimethoxy silane as the inventive organosilicon compound contains two cyclopentyl groups in a molecule, by virtue of which the compound has a medium refractive index among organosilicon compounds and bulky molecular structure so that dicyclopentyl dimethoxy silane is free from the difficulty in matching of the refractive indices unavoidable in ordinary organosilane compounds and has a greatly improved solubility in certain organic solvents such as lower aliphatic hydrocarbon solvents, e.g., n-pentane. Moreover, the bulkiness of the cyclopentyl groups satisfies the requirement for a silylating agent in the reaction of organic synthesis so that dicyclopentyl dimethoxy silane of the invention can be a potential silylating agent useful in various organic syntheses in which tert-butyl dimethyl chlorosilane cannot be used for silylation.

Dicyclopentyl dimethoxy silane of the invention can be prepared by the reaction of 2 moles of cyclopentyl magnesium halide as a Grignard reagent and 1 mole of tetramethoxy silane. Alternatively, the silane compound can be prepared by the reaction of 2 moles of cyclopentyl magnesium halide with 1 mole of a tetrahalogenosilane to give a dicyclopentyl dihalogenosilane which is then reacted with methyl alcohol.

The above mentioned tetramethoxy silane or tetrahalogenosilane can be used as such without dilution with an organic solvent in the reaction with the Grignard reagent but it is optional that these reactants are used in the form of a solution as diluted with an organic solvent such as tetrahydrofuran, diethyl ether, dibutyl ether and the like in a molar concentration of 0.01 to 4 M or, preferably, 0.1 to 4 M.

The cyclopentyl magnesium halide, including cyclopentyl magnesium chloride, bromide and iodide, as the Grignard reagent to be reacted with tetramethoxy silane or a tetrahalogenosilane is used in the form of a solution in an organic solvent such as tetrahydrofuran, diethyl ether, dibutyl ether and the like in a concentration of 0.01 to 4 M or, preferably, 0.1 to 4 M.

The reaction is performed by adding a solution of a cyclopentyl magnesium halide as the Grignard reagent to the above mentioned silane or an organic solution thereof and agitating the mixture at a temperature in the range from 20 to 100 °C to effect the reaction followed, after completion of the reaction, by removal of the precipitated magnesium salt by filtration and the solvent from the filtrate by distillation to give a crude product which can be purified by distillation to give the desired dicyclopentyl dimethoxy silane or dicyclopentyl dihalogenosilane. This dicyclopentyl dihalogenosilane as an intermediate can be easily converted to dicyclopentyl dimethoxy silane by the reaction with an excess amount, i.e. more than 2 moles per mole of the intermediate, of methyl alcohol.

Although the description above is given for the preparation of dicyclopentyl dimethoxy silane, substantially the same procedure is applicable to any dicyclopentyl alkoxy silane, e.g., dicyclopentyl diethoxy silane, by replacing the methoxy silane with an alkoxy silane having the desired alkoxy groups, e.g., ethoxy silane, and methyl alcohol with an alcohol, e.g., ethyl alcohol, corresponding to the desired alkoxy group.

In the following, preparation procedure and identification and characterization of the inventive compound are described in more detail by way of examples.

Example 1.

A tetrahydrofuran solution of cyclopentyl magnesium chloride was prepared by the reaction of 209 g (1.998 moles) of cyclopentyl chloride and 48.6 g (2.0 moles) of magnesium metal turnings in 1 liter of dried tetrahydrofuran.

Then, the thus prepared tetrahydrofuran solution of cyclopentyl magnesium chloride was added dropwise into a solution of 152 g (0.999 mole) of tetremethoxy silane dissolved in 500 ml of dried tetrahydrofuran in such a rate that the temperature of the reaction mixture could be kept not to exceed 50 °C. After confirmation that the reaction had come to the end by the gas chromatographic analysis, the reaction mixture was filtered to remove the precipitated magnesium salt and the filtrate was freed from the solvent by evaporation followed by distillation under reduced pressure to give 173 g of a colorless liquid fraction boiling at 103 °C under a pressure of 5 mmHg. The result of the gas chromatographic analysis of this product indicated a single component, which had a density of 0.986 g/ml at 25 °C, refractive index of 1.4651 at 25 °C and viscosity of 2.561 centistokes at 25 °C.

The analytical results of this compound shown below supported a conclusion that it was the desired dicyclopentyl dimethoxy silane. The above mentioned yield of the product corresponds to 78% of the theoretical value.

Gas chromatographic-mass spectrometric analysis
Molecular ion peak: M/Z = 228
$^1$H-NMR analysis ($\delta$, ppm, in $CDCl_3$):
3.62(s, 6H, $OCH_3$)
2.2 to 0.7 (m, 18H, $-CH_2-$, Si-CH)
Infrared absorption spectrum:
See the figure in the accompanying drawing.

Example 2.

A tetrahydrofuran solution of cyclopentyl magnesium chloride was prepared by the reaction of 211 g (2.018 moles) of cyclopentyl chloride and 50.2 g (2.1 moles) of magnesium metal turnings in 1 liter of dried tetrahydrofuran.

Then, the thus prepared tetrahydrofuran solution of cyclopentyl magnesium chloride was added dropwise into a solution of tetrachlorosilane, prepared by dissolving 170 g (1.001 moles) of tetrachlorosilane in 500 ml of dried tetrahydrofuran, in such a rate that the temperature of the reaction mixture could be kept not to exceed 40 °C. After confirmation by the gas chromatographic analysis that the reaction had come to the end, the reaction mixture was filtered to remove the precipitated magnesium salt and the filtrate was freed from the solvent by evaporation followed by distillation under reduced pressure to give 168 g of a colorless liquid fraction boiling at 120 °C under a pressure of 7 mmHg. The result of the gas chromatographic analysis of this product indicated a single component. The above mentioned yield of this intermediate product corresponds to 0.708 mole when it is assumed to be dicyclopentyl dichlorosilane.

In the next place, this liquid product was added dropwise into a solution of 50 g (1.560 moles) of methyl alcohol and 95 g (1.582 moles) of urea dissolved in 500 ml of dried hexane to effect the dehydrochlorination reaction. After confirmation by the gas chromatographic analysis that the reaction had come to the end, the layer of the hexane solution was taken by phase separation and freed from hexane by distillation. The residual liquid was subjected to distillation under reduced pressure to give 139 g of a colorless liquid fraction boiling at 103 °C under a pressure of 5 mmHg. This product could be identified to be dicyclopentyl dimethoxy silane from substantially the same analytical results of the gas chromatographic-mass spectrometric, $^1$H-NMR spectrometric and infrared absorption spectrophotometric analyses as well as substantially the same physical parameters including density, refractive index and viscosity as in the product obtained in Example 1. The above mentioned yield of the product as isolated corresponds to 61% of the theoretical value based on the amount of the tetrachlorosilane.

**Claims**

1. A dicyclopentyl dialkoxy silane.

2. Dicyclopentyl dimethoxy silane.

# FIGURE

EP 0 460 590 A1

European
Patent Office

**EUROPEAN SEARCH
REPORT**

Application Number

**EP 91 10 9083**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 360 491 (MITSUI PETROCHEMICAL)<br>* example 1; claim 6 *<br>- - - | 2 | C 07 F 7/18 |
| X | EP-A-0 350 170 (MITSUI PETROCHEMICAL)<br>* page 10, lines 34-36; example 1 *<br>- - - | 2 | |
| X | EP-A-0 348 693 (SCHERING)<br>* page 5, table 2; claim *<br>- - - - - | 1-2 | |

TECHNICAL FIELDS
SEARCHED (Int. Cl.5)

C 07 F 7/18

The present search report has been drawn up for all claims

| Place of search | Date of completion of search | Examiner |
|---|---|---|
| Berlin | 03 September 91 | KAPTEYN H G |